# EUROPEAN PATENT SPECIFICATION

(11) **EP 4 097 938 B1**
(45) Date of publication and mention of the grant of the patent: **04.10.2023**
(21) Application number: 20848974.0
(22) Date of filing: 11.12.2020
(51) Int. Cl.: G06F 21/57, G06F 21/55, H04L 9/40

(54) **A TEST SYSTEM AND A TEST METHOD FOR SIMULATION OF DDOS ATTACKS**
TESTSYSTEM UND TESTVERFAHREN ZUR SIMULATION VON DDOS-ANGRIFFEN
SYSTÈME DE TEST ET PROCÉDÉ DE TEST POUR LA SIMULATION D'ATTAQUES DDOS

(30) Priority: 27.01.2020 TR 202001213
(43) Date of publication of application: 07.12.2022
(73) Proprietor: BARIKAT INTERNET GUVENLIGI BILISIM TICARET ANONIM SIRKETI, Cankaya/Ankara 06510 (TR)
(72) Inventor: CANDAN, Murat Huseyin, Çankaya/Ankara (TR); OZUGUR, Cenk, Çankaya/Ankara (TR)
(74) Representative: Cayli, Hülya
(86) International application number: PCT/TR2020/051270
(87) International publication number: WO 2021/154177

(56) References cited:
- WO-A1-2015/116138
- US-A1- 2016 352 775
- US-A1- 2018 046 811
- SIBONI SHACHAR ET AL: "Security Testbed for Internet-of-Things Devices", IEEE TRANSACTIONS ON RELIABILITY, IEEE SERVICE CENTER, PISCATAWAY, NJ, US, vol. 68, no. 1, 1 March 2019 (2019-03-01), pages 23-44, XP011712501, ISSN: 0018-9529, DOI: 10.1109/TR.2018.2864536 [retrieved on 2019-02-28]

## Description

### Field of the Invention

The present invention relates to a test system and a test method for testing the robustness of the networked systems against the distributed denial-of-service (DDoS) attacks.

### Background Art

Systems having an open network connection, such as the Internet (e.g. personal computers, servers, etc.), may be targets of various attacks over the network. As a result of the attacks, the systems either cannot perform their functions or they operate in a much slower case. One of the attacks against the systems having an open network connection is a distributed denial-of-service (DDoS) attack. The main aim of the denial-of-service (DDoS) attacks is to overwhelm the targeted system with more traffic than the system can accommodate to prevent the requests of its intended users from being fulfilled. In distributed denial-of-service (DDoS) attacks, being a type of the denial-of-service (DoS) attacks, a large number of requests are generated from many different Internet protocol (IP) addresses, making it possible to continue the attack even if an IP address is blocked.

In order to ensure that the services offered to the users are not disrupted, networked systems should be rendered robust against attacks such as the distributed denial-of-service attacks. Therefore, it is preferred to test the robustness of the systems against the specified attacks before a real attack is attempted. DDoS tests may be performed manually by generating requests originating from different computers. However, in such tests, it is not possible to simulate a real attack situation since the number of the computers being the sources of attack are limited. In the prior art, there are also applications that allow performing attacks from a large number of virtual machines.

However, such applications cannot be adequately customized to the system to be tested, or may not always be sufficient to simulate a real situation of attack due to the inability to orchestrate a large number of devices.

Patent document no. US2018046811A1 discloses a DDoS testing service. According to this document, in order to ease the DDoS testing operation, test is performed by a cloud based system. However, according to this document, number of attacks to be performed by said cloud based system is limited. Therefore, a target system may not be tested to its limits.

### Summary of the Invention

The present invention describes a test system and a test method, as disclosed in the appended claims, for testing the robustness of at least one target system against the distributed denial-of-service attacks.

The test system comprises a cloud management system for managing at least two cloud service providers for creating a distributed bot structure suitable for DDoS simulation; command control centers for operational control of at least two virtual machines operating in each data center (area) in order to perform at least one attack against the target system to be tested in each one; at least one monitoring system that monitors the health condition of the target system to be tested in real-time during the test; an attack surface analyzing system, which is connected with the cloud service provider and the monitoring system and which determines the test parameters by analyzing the target system to be tested before the test; an attack management system ensuring that the target system is tested based on the predefined attack types, by means of the virtual machines operating on at least one cloud service provider in accordance with the test parameters determined; and a reporting unit which analyses the health condition of the target system monitored by the monitoring system after the attack and determines the robustness of the target system against the attack.

The test method comprises the steps of analyzing the target system to be tested so as to determine the system parameters of the target system; determining the test parameters in accordance with the system parameters determined; performing an attack against the target system by means of the virtual machines operating on at least one cloud service provider in accordance with the test parameters determined; and analyzing the health condition of the target system during the attack in order to the determine the robustness of the target system against the attack.

In the test system and test method according to the present invention, by analyzing the target system before the test so as to determine the system parameters, and by determining the test parameters based on the system parameters determined, the test is customized to the target system. In addition, thanks to the use of virtual machines operating on a plurality of cloud service providers, high-scale attacks are launched from a large number of sources from different locations.

### Object of the Invention

An object of the present invention is to provide a test system and a test method for testing the robustness of the networked systems against the distributed denial-of-service attacks.

Another object of the present invention is to provide a test system and a test method for performing a test customized to the target system.

Another object of the present invention is to provide a test system and a test method capable of simulating a real DDoS attack situation.

Another object of the present invention is to provide a test system and a test method capable of performing a simultaneous orchestration of multiple cloud service providers and multiple bots in distributed denial-of-service attack simulations.

Yet another object of the present invention is to provide a test system and a test method capable of performing live monitoring during the distributed denial-of-service tests, thereby enabling a real-time data processing.

### Description of the Drawings

An embodiment of the test system according to the present invention is illustrated in the accompanying drawings, in which:

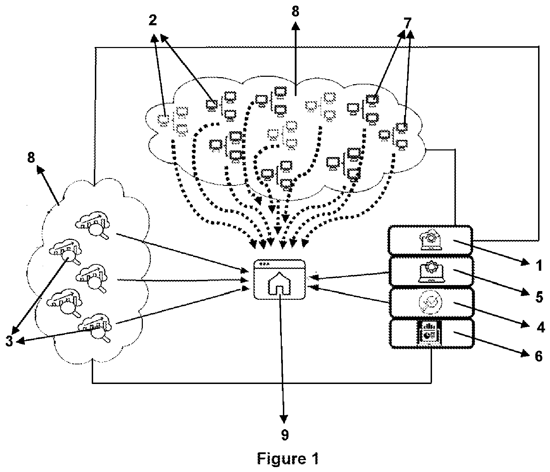

Figure 1 is a block diagram of a test system.

All the parts in the figures are individually assigned a reference numeral and the corresponding terms of the numbers are listed below.

| | |
|---|---|
| Cloud Management System | (1) |
| Command Control Centers | (2) |
| Monitoring System | (3) |
| Attack Surface Analyzing System | (4) |
| Attack Management System | (5) |
| Reporting Unit | (6) |
| Virtual Machines | (7) |
| Cloud Service Provider | (8) |
| Target System | (9) |

### Description of the Invention

Systems having an open network connection such as the Internet may be targets of distributed denial-of-service (DDoS) attacks. The aim of the DDoS attacks is, in general, to overwhelm the target system with superfluous false user requests in an attempt to prevent the requests of its intended users from being fulfilled, or being fulfilled in a delayed manner. In order to provide a continuous service to the users, the systems should be robust against DDoS attacks. Accordingly, the present invention provides a test system and a test method for testing the robustness of the networked systems against the distributed denial-of-service attacks.

The test system according to the present invention, an exemplary block diagram of which is illustrated in figure 1, allows testing of the robustness of at least one target system (9) against the distributed denial-of-service attacks. The test system comprises a cloud management system (1) for managing at least two cloud service providers (8) for creating a distributed virtual machine (7) structure suitable for DDoS simulations; at least one command control center (2) for operational control of at least two virtual machines (7) operating in each data center in order to perform at least one attack against the target system (9) to be tested in each one; at least two cloud service provider (8) operating at least two (preferably more) virtual machines (7); at least one monitoring system (3) that monitors the condition of the target system (9) to be tested in real-time during the test; at least one attack surface analyzing system (4), which is connected with the cloud service provider (8) and the monitoring system (3) and which determines the test parameters by analyzing the target system (9) to be tested before the test; at least one attack management system (5) ensuring that the target system (9) is tested based on the predefined attack types, by means of the virtual machines (7) operating on at least one cloud service provider (8) in accordance with the test parameters determined; and at least one reporting unit (6) which analyses the condition of the target system (9) monitored by the monitoring system (3) after the attack and determines the robustness of the target system (9) against the attack.

The test method of the present invention allows testing of the robustness of at least one target system (9) against the distributed denial-of-service attacks, which method comprising the steps of analyzing the target system (9) to be tested, by means of the attack surface analyzing system (4) before the test, so as to determine the system parameters of the target system (9); determining the test parameters in accordance with the system parameters determined; performing an attack against the target system (9) by means of the virtual machines (7) operating on at least one cloud service provider (8) in accordance with the test parameters determined; and determining the robustness of the target system (9) against the attack, and reporting same, by monitoring and analyzing of the condition of the target system (9) in real-time during the attack.

In a preferred embodiment of the invention, the attack management system (5) comprises at least two attack libraries including attack scenarios for at least two (preferably more) different types of attacks. In this embodiment, the test method comprises the step of selecting at least one type of attack from the attack library, prior to the step of determining the test parameters in accordance with the system parameters determined. Here, at the step of determining the test parameters in accordance with the system parameters determined, the test parameters are determined based on the type of attack selected and the system parameters determined. Thus, the robustness of the target system (9) against different types of attacks is tested.

In another preferred embodiment of the invention, the test system ensures that a test attack is performed in a controlled case, via a command control center (2) for managing at least one (preferably more) virtual machine (7) launched from different data centers (areas) on at least one cloud service provider (8), the management being specific to the data center where the virtual machine is located, and the cloud management system (1) managing the at least one (preferably more) command control center (2) and the virtual machines (7). In this embodiment, initiation and termination of the test procedure, and selecting of the test type, etc. may be carried out by the attack management system (5). Thus, for example, in the event that during the test, the target system (9) is not robust against the test, and its operation is interrupted, the test procedure is terminated in a fast manner (e.g. with a single button), and the target system (9) is rendered operable again.

In another preferred embodiment of the invention, the test system comprises monitoring and analyzing all changes on the target system (9) during the test by means of at least one (preferably more) monitoring system (3) on the cloud service provider (8). In this embodiment, the test method comprises the step of displaying the results of the analysis, after the step of determining the robustness of the target system (9) against the attack by analyzing the condition of the target system (9) during the attack. Here, thanks to the display of the results of analysis by the reporting unit (6), information about the robustness of the target system (9) against the DDoS attacks, the sufficiency of the capabilities of the DDoS blocking systems responsible for the protection of the target system (9) and/or the condition of the target system (9) (especially, its weaknesses) is obtained by the operator performing the test.

In another preferred embodiment of the invention, the test system comprises at least two monitoring systems (3), each located in different geographical locations. Here, the monitoring systems (3) are in the form of virtual devices from different geographical regions of the world. By using a plurality of monitoring systems (3) from different geographical locations in the test system, the behavior of the target system (9) against different locations may also be analyzed.

In an exemplary embodiment of the present invention, in order to test the robustness of the target system (9) against a desired type of attack, at first an attack surface analysis of the target system (9) is performed, and thus the parameters of the target system (9) are determined. Here, the parameters determined may be bandwidth, open TCP/IP services, IP addresses, the possible vulnerabilities thereof, subdomains, large files therein, and pages taking too long to load. Such analyzes are carried out by the attack surface analyzing system (4) before the test.

In another preferred embodiment of the present invention, the type of DDoS attack is selected by the attack management system (5), based on which type of attack the robustness of the target system (9) is desired to be tested. The types of attacks that may be selected may be one of the following: HTTP GET, HTTP POST, HTTPS GET, HTTPS POST, Slowloris, DNS Query, DNS Random Query, TCP SYN Flood, TCP SYN-ACK Flood, TCP ACK-FIN Flood, TCP RST Flood, TCP PUSH-ACK Flood, TCP All Flags Flood, TCP No Flags Flood, UDP Flood, UDP Fragmentation Flood, ICMP Flood. Based on the system parameters determined and the type of attack selected, the parameters of the attack to be performed against the target system (9) are determined. Here, the determined parameters of attack may be the number of the virtual machines (7) (bot), the location of the virtual machines (7) (geographical location and/or IP addresses, etc.), the bandwidth of the requests to be generated, and the volume of the requests to be sent to the target system (9) by the virtual machines (7).

After the test parameters are determined, an attack against the target system (9) is initiated by the virtual machines (7) operating on the at least one cloud service provider (8) in accordance with these parameters. During the attack, the condition of the target system (9) is monitored. The monitoring is accomplished by collecting information about whether the target system (9) has responded to the requests transmitted by the virtual machines (7) and formed specifically for the services the target system (9) is listening, and how long it takes to respond, etc. Here, by using a plurality of cloud service providers (8), it is possible to compare the responses of the target system to different cloud service providers (8), and to use the virtual machines (7) operating on the other cloud service provider (8) when the capacity of a cloud service provider (8) is not sufficient. Furthermore, for example, if the target system (9) blocks all the requests from a cloud service provider (8) during the test, the test is enabled to continue using the virtual machines (7) operating on the other cloud service provider (8). During the test, the information collected by monitoring the target system (9) is analyzed and the robustness of target system (9) against the selected attack is determined. Also, a scoring can be made for the target system (9) by using the data obtained from the monitoring in a protocol-based parametric calculation. The analysis and the score obtained therefrom may be displayed to the test operators and/or the authorities of the target system (9).

In the test system and test method according to the present invention, by analyzing the target system (9) before the test so as to determine the system parameters, and by determining the test parameters based on the system parameters determined, the test is customized to the target system (9). In addition, thanks to the use of virtual machines (7) operating on a plurality of cloud service providers (8), high-number and high scale attacks are launched from different locations.

## Claims

1. A test system for testing the robustness of at least one target system (9) against 4he distributed denial-of-service, DDoS, attacks, the system by comprising:
- at least one cloud management system (1) for managing at least two cloud service providers (8) for creating a distributed virtual machine (7) structure suitable for DDoS simulations;
- at least two command control centers (2) for operational control of at least two virtual machines (7) of said distributed virtual machine (7) structure operating in each data center of said at least two cloud service providers (8) in order to perform at least one test attack against the at least one target system (9) to be tested in each one of said data center;
- at least one monitoring system (3) that monitors live the health condition of the at least one target system (9) to be tested during the test;
- at least one attack surface analyzing system (4), which is connected with said at least two cloud service providers (8) and the monitoring system (3) and which determines test parameters by analyzing the at least one target system (9) to be tested before the test;
- at least one attack management system (5) ensuring that the at least one target system (9) is tested based on predefined attack types, by means of the at least two virtual machines (7) operating on at least one cloud service provider (8) of said at least two cloud service providers (8) in accordance with the test parameters determined, wherein if the at least one target system (9) blocks all the requests from the at least one cloud service provider (8) of said at least two cloud service providers (8) during the test, the test is continued using the at least two virtual machines (7) operating on another cloud service provider (8) of said at least two cloud service providers (8); and
- at least one reporting unit (6) which analyses the health condition of the at least one target system (9) monitored by the monitoring system (3) after the test attack and determines the robustness of the at least one target system (9) against the distributed denial-of-service attacks.

2. A test system according to claim 1, wherein the attack management system (5) comprises at least two attack libraries including attack scenarios for at least two different types of attacks.

3. A test system according to claim 1 or 2, wherein the command control centers (2) are directly connected to the cloud management system (1) and managed by the cloud management system (1).

4. A test system according to any one of the preceding claims, wherein the at least one monitoring system (3) for monitoring and analyzing the effects of the test attack launched by the attack management system (5), on the at least one target system (9), until it ends, from different geographical regions and by different virtual machines (7).

5. A test system according to any one of the preceding claims, wherein the monitoring system (3) is directly connected to the cloud management system (1).

6. A test system according to any one of the preceding claims, wherein at least one monitoring system (3) is directly connected to the reporting unit (6).

7. A test system according to any one of the preceding claims, further comprising at least two monitoring systems (3), each located in different geographical locations.

8. A test method for testing the robustness of at least one target system (9) against distributed denial-of-service attacks, the test method comprising the steps of:
- analyzing the at least one target system (9) to be tested, by means of an attack surface analyzing system (4), so as to determine system parameters of the at least one target system (9);
- determining test parameters in accordance with the system parameters determined;
- performing at least one test attack against the at least one target system (9) by means of virtual machines (7) operating on at least one cloud service provider (8) of said at least two cloud service providers (8) in accordance with the test parameters determined; and
- determining the robustness of the at least one target system (9) against the distributed denial-of-service attacks by monitoring and analyzing the condition of the at least one target system (9) during the at least one test attack wherein, if the at least one target system (9) blocks all the requests from the at least one cloud service provider (8) of said at least two cloud service providers (8) during the test, the test is continued using the virtual machines (7) operating on another cloud service provider (8) of said at least two cloud service providers (8).

9. A test method according to claim 8, further comprising the step of selecting at least one type of attack from an attack library, prior to the step of determining the test parameters in accordance with the system parameters determined.

10. A test method according to claim 9, wherein at the step of determining the test parameters in accordance with the system parameters determined, the test parameters are determined based on the at least one type of attack selected and the system parameters determined.

11. A test method according to any one of claims 8 to 10, further comprising the step of displaying and reporting of the results of the analysis, after the step of determining the robustness of the at least one target system (9) against the distributed denial-of-service attacks by monitoring and analyzing the condition of the at least one target system (9) during the at least one test attack

## Patentansprüche

1. Testsystem zum Testen der Robustheit wenigstens eines Zielsystems (9) gegenüber Distributed-Denial-of-Service-Angriffen, DDoS-Angriffen, wobei das System aufweist:
- wenigstens ein Cloud-Managementsystem (1) zum Managen von wenigstens zwei Cloud-Serviceanbietern (8) zum Erzeugen einer Struktur verteilter virtueller Maschinen (7), die für DDoS-Simulationen geeignet ist,
- wenigstens zwei Befehls- und Steuerungszentren (2) zur operativen Steuerung der wenigstens zwei virtuellen Maschinen (7) der Struktur verteilter virtueller Maschinen (7), die in jedem Datenzentrum der wenigstens zwei Cloud-Serviceanbieter (8) arbeiten, um wenigstens einen Testangriff gegen das wenigstens eine Zielsystem (9) durchzuführen, das in jedem der Datenzentren zu testen ist,
- wenigstens ein Überwachungssystem (3), das in Echtzeit den Funktionsfähigkeitszustand des wenigstens einen, während des Tests zu testenden Zielsystems (9) überwacht,
- wenigstens ein Angriffsflächen-Analysesystem (4), das mit den wenigstens zwei Cloud-Serviceanbietern (8) und dem Überwachungssystem (3) verbunden ist und das vor dem Test durch Analyse des wenigstens einen zu testenden Zielsystems (9) Testparameter bestimmt,
- wenigstens ein Angriffsmanagementsystem (5), das sicherstellt, dass das wenigstens eine Zielsystem (9) basierend auf vordefinierten Angriffstypen getestet wird durch die wenigstens zwei virtuellen Maschinen (7), die in wenigstens einem Cloud-Serviceanbieter (8) der wenigstens zwei Cloud-Serviceanbieter (8) gemäß den bestimmten Testparametern arbeiten, wobei, wenn das wenigstens eine Zielsystem (9) alle Anfragen von dem wenigstens einen Cloud-Serviceanbieter (8) der wenigstens zwei Cloud-Serviceanbieter (8) während des Tests blockiert, der Test fortgesetzt wird unter Verwendung der wenigstens zwei virtuellen Maschinen (7), die in einem anderen Cloud-Serviceanbieter (8) der wenigstens zwei Cloud-Serviceanbieter (8) arbeiten, und
- wenigstens eine Berichterstattungseinheit (6), die den Funktionsfähigkeitszustand des wenigstens einen von dem Überwachungssystem (3) überwachten Zielsystems (9) nach dem Testangriff analysiert und die Robustheit des wenigstens einen Zielsystems (9) gegenüber den Distributed-Denial-of-Service-Angriffen bestimmt.

2. Testsystem nach Anspruch 1, wobei das Angriffsmanagementsystem (5) wenigstens zwei Angriffsbibliotheken enthält, die Angriffsszenarien für wenigstens zwei verschiedene Typen von Angriffen enthalten.

3. Testsystem nach Anspruch 1 oder 2, wobei die Befehls- und Steuerzentren (2) direkt mit dem Cloud-Managementsystem (1) verbunden sind und diese durch das Cloud-Managementsystem (1) gemanagt werden.

4. Testsystem nach einem der vorhergehenden Ansprüche, wobei das wenigstens eine Überwachungssystem (3) die Auswirkungen des durch das Angriffsmanagementsystem (5) von verschiedenen geographischen Regionen aus und durch verschiedene virtuelle Maschinen (7) gestarteten Angriffs (9) überwacht und analysiert, bis er endet.

5. Testsystem nach einem der vorhergehenden Ansprüche, wobei das Überwachungssystem direkt mit dem Cloud-Managementsystem (1) verbunden ist.

6. Testsystem nach einem der vorhergehenden Ansprüche, wobei das wenigstens eine Überwachungssystem (3) direkt mit der Berichterstattungseinheit (6) verbunden ist.

7. Testsystem nach einem der vorhergehenden Ansprüche, das weiterhin wenigstens zwei Überwachungssysteme (3) aufweist, die sich an verschiedenen geographischen Orten befinden.

8. Testverfahren zum Testen der Robustheit wenigstens eines Zielsystems (9) gegenüber Distributed-Denial-of-Service-Angriffen, wobei das Testverfahren die Schritte beinhaltet:
- Analysieren des wenigstens einen zu testenden Zielsystems (9) mittels eines Angriffsflächen-Analysesystems (4), um so Systemparameter des wenigstens einen Zielsystems (9) zu bestimmen,
- Bestimmen von Testparametern gemäß den bestimmten Systemparametern,
- Durchführen wenigstens eines Testangriffs gegen das wenigstens eine Zielsystem (9) mittels virtueller Maschinen (7), die in wenigstens einem Cloud-Serviceanbieter (8) der wenigstens zwei Cloud-Serviceanbieter (8) gemäß den bestimmten Testparametern arbeiten, und
- Bestimmen der Robustheit des wenigstens einen Zielsystems (9) gegenüber den Distributed-Denial-of-Service-Angriffen durch Überwachen und Analysieren des Zustands des wenigstens einen Zielsystems (9) während des wenigstens einen Testangriffs, wobei, wenn das wenigstens eine Zielsystem (9) alle Anfragen von dem wenigstens einen Cloud-Serviceanbieter (8) der wenigstens zwei Cloud-Serviceanbieter (8) während des Tests blockiert, der Test unter Verwendung der virtuellen Maschinen (7) fortgesetzt wird, die in einem anderen Cloud-Serviceanbieter (8) der wenigstens zwei Cloud-Serviceanbieter (8) arbeiten.

9. Testverfahren nach Anspruch 8, das den Schritt beinhaltet, vor dem Schritt des Bestimmens der Testparameter nach Maßgabe der bestimmten Systemparameter wenigstens einen Angriffstyp aus einer Angriffsbibliothek auszuwählen.

10. Testverfahren nach Anspruch 9, wobei bei dem Schritt des Bestimmens der Testparameter nach Maßgabe der bestimmten Systemparameter die Testparameter basierend auf dem wenigstens einen ausgewählten Angriffstyp und den bestimmten Systemparametern bestimmt werden.

11. Testverfahren nach einem der Ansprüche 8 bis 10, das weiter den Schritt enthält, nach dem Schritt des Bestimmens der Robustheit des wenigstens einen Zielsystems (9) gegenüber den Distributed-Denial-of-Service-Angriffen durch Überwachen und Analysieren des Zustands des wenigstens einen Zielsystem (9) während des wenigstens einen Testangriffs die Resultate der Analyse anzuzeigen und zu berichten.

## Revendications

1. Système de test pour tester la robustesse d'au moins un système cible (9) contre les attaques de refus de service distribuées (DDoS), le système comprenant :
- au moins un système de gestion en nuage (1) pour gérer au moins deux fournisseurs de services en nuage (8) afin de créer une structure de machine virtuelle distribuée (7) adaptée aux simulations DDoS ;
- au moins deux centres de commande et de contrôle (2) pour le contrôle opérationnel d'au moins deux machines virtuelles (7) de ladite structure de machine virtuelle distribuée (7) fonctionnant dans chaque centre de données desdits au moins deux fournisseurs de services en nuage (8) afin d'effectuer au moins une attaque de test contre ledit au moins un système cible (9) à tester dans chacun desdits centres de données ;
- au moins un système de surveillance (3) qui surveille en direct l'état de santé dudit au moins un système cible (9) à tester pendant le test ;
- au moins un système d'analyse de surface d'attaque (4), qui est connecté auxdits au moins deux fournisseurs de services en nuage (8) et au système de surveillance (3) et qui détermine les paramètres de test en analysant ledit au moins un système cible (9) à tester avant le test ;
- au moins un système de gestion d'attaque (5) garantissant que ledit au moins un système cible (9) est testé sur la base de types d'attaques prédéfinis, au moyen dudit au moins deux machines virtuelles (7) fonctionnant sur au moins un fournisseur de services en nuage (8) parmi lesdits au moins deux fournisseurs de services en nuage (8), conformément aux paramètres de test déterminés, dans lequel, si ledit au moins un système cible (9) bloque toutes les demandes provenant dudit au moins un fournisseur de services en nuage (8) parmi lesdits au moins deux fournisseurs de services en nuage (8) pendant le test, le test se poursuit en utilisant lesdites au moins deux machines virtuelles (7) fonctionnant sur un autre fournisseur de services en nuage (8) parmi lesdits au moins deux fournisseurs de services en nuage (8) ; et
- au moins une unité de rapport (6) qui analyse l'état de santé dudit au moins un système cible (9) surveillé par le système de surveillance (3) après l'attaque de test et détermine la robustesse dudit au moins un système cible (9) contre les attaques de refus de service distribuées.

2. Système de test selon la revendication 1, dans lequel le système de gestion d'attaque (5) comprend au moins deux bibliothèques d'attaques comprenant des scénarios d'attaques pour au moins deux types d'attaques différents.

3. Système de test selon la revendication 1 ou 2, dans lequel les centres de commande et de contrôle (2) sont directement connectés au système de gestion en nuage (1) et gérés par le système de gestion en nuage (1).

4. Système de test selon l'une quelconque des revendications précédentes, dans lequel ledit au moins un système de surveillance (3) pour surveiller et analyser les effets de l'attaque de test lancée par le système de gestion d'attaque (5), sur ledit au moins un système cible (9), jusqu'à ce qu'elle prenne fin, à partir de différentes régions géographiques et par différentes machines virtuelles (7).

5. Système de test selon l'une quelconque des revendications précédentes, dans lequel le système de surveillance (3) est directement connecté au système de gestion en nuage (1).

6. Système de test selon l'une quelconque des revendications précédentes, dans lequel ledit au moins un système de surveillance (3) est directement connecté à l'unité de rapport (6).

7. Système de test selon l'une quelconque des revendications précédentes, comprenant en outre au moins deux systèmes de surveillance (3), chacun situé dans des emplacements géographiques différents.

8. Procédé de test pour tester la robustesse d'au moins un système cible (9) contre les attaques de refus de service distribuées, le procédé de test comprenant les étapes suivantes consistant à :
- analyser ledit au moins un système cible (9) à tester, au moyen d'un système d'analyse de surface d'attaque (4), afin de déterminer des paramètres de système dudit au moins un système cible (9) ;
- déterminer des paramètres de test en fonction des paramètres de système déterminés ;
- effectuer au moins une attaque de test contre ledit au moins un système cible (9) au moyen de machines virtuelles (7) fonctionnant sur au moins un fournisseur de services en nuage (8) parmi lesdits au moins deux fournisseurs de services en nuage (8), conformément aux paramètres de test déterminés ; et
- déterminer la robustesse dudit au moins un système cible (9) contre les attaques de refus de service distribuées en surveillant et en analysant l'état dudit au moins un système cible (9) pendant ledit au moins une attaque de test dans lequel, si ledit au moins un système cible (9) bloque toutes les demandes dudit au moins un fournisseur de services en nuage (8) parmi lesdits au moins deux fournisseurs de services en nuage (8) pendant le test, le test se poursuit en utilisant les machines virtuelles (7) fonctionnant sur un autre fournisseur de services en nuage (8) parmi lesdits au moins deux fournisseurs de services en nuage (8).

9. Procédé de test selon la revendication 8, comprenant en outre l'étape consistant à sélectionner au moins un type d'attaque dans une bibliothèque d'attaques, avant l'étape consistant à déterminer les paramètres de test conformément aux paramètres de système déterminés.

10. Procédé de test selon la revendication 9, dans lequel, à l'étape consistant à déterminer les paramètres de test en fonction des paramètres de système déterminés, les paramètres de test sont déterminés sur la base dudit au moins un type d'attaque sélectionné et des paramètres de système déterminés.

11. Procédé de test selon l'une quelconque des revendications 8 à 10, comprenant en outre l'étape consistant à afficher et à rapporter les résultats de l'analyse, après l'étape consistant à déterminer la robustesse dudit au moins un système cible (9) contre les attaques de refus de service distribuées en surveillant et en analysant l'état dudit au moins un système cible (9) au cours dudit au moins une attaque de test.
